# EUROPÄISCHE PATENTSCHRIFT

(11) **EP 2 446 244 B1**
(45) Veröffentlichungstag und Bekanntmachung des Hinweises auf die Patenterteilung: **08.08.2018**
(21) Anmeldenummer: 10730365.3
(22) Anmeldetag: 25.06.2010
(51) Int. Cl.: G01N 15/14, G01N 15/02

(54) **PARTIKELMESSKOPF, PARTIKELMESSVORRICHTUNG UND PARTIKELMESSVERFAHREN ZUR MESSUNG DER PARTIKELFRACHT VON FLUIDEN**
PARTICLE MEASURING HEAD, PARTICLE MEASURING APPARATUS AND PARTICLE MEASURING METHOD FOR MEASURING THE PARTICULATE LOAD OF FLUIDS
TÊTE DE MESURE DE PARTICULES, DISPOSITIF DE MESURE DE PARTICULES ET PROCÉDÉ DE MESURE DE PARTICULES POUR LA MESURE DE LA CHARGE EN PARTICULES DE FLUIDES

(30) Priorität: 26.06.2009 DE 102009030691
(43) Veröffentlichungstag der Anmeldung: 02.05.2012
(73) Patentinhaber: Fraunhofer-Gesellschaft zur Förderung der angewandten Forschung e.V., 80686 München (DE)
(72) Erfinder: GRIMME, Ralf, 74385 Pleidelsheim (DE); GOMMEL, Udo, 71106 Magstadt (DE); GROENING, Martin, 70569 Stuttgart (DE); BOOS, Stefan, 70567 Stuttgart (DE)
(74) Vertreter: Pfenning, Meinig & Partner mbB
(86) Internationale Anmeldenummer: PCT/EP2010/003901
(87) Internationale Veröffentlichungsnummer: WO 2010/149391

(56) Entgegenhaltungen:
- EP-A2- 0 487 189
- EP-A2- 0 720 012
- WO-A1-2004/081548
- DE-A1- 3 534 973
- GB-A- 2 202 626
- US-A- 4 827 143
- US-A- 5 485 270
- US-A1- 2004 159 799

## Beschreibung

Die Erfindung betrifft einen Partikelmesskopf, eine mit einem solchen Partikelmesskopf ausgestattete Partikelmessvorrichtung sowie ein Verfahren zur Messung von Partikeln in einem Fluid unter Verwendung dieser Partikelmessvorrichtung.

Relativbewegungen zwischen Bauteilen z. B. in Baugruppen, Geräten und Fertigungsanlagen führen zu Abrieb und damit zu Partikeln. Übersteigt die Abriebmenge ein zulässiges Maß, führt dies zum Verschleiß und Ausfall des jeweiligen Systems. Treten die entstehenden Partikel an unerwünschten Positionen aus dem jeweiligen System aus, kann dies zu Problemen im Umfeld, z.B. im Anwendungsbereich Reinraumtechnik, führen.

Normalerweise wird versucht, die Partikelerzeugung präventiv zu vermeiden. Hierzu werden beispielsweise konstruktiv Reibstellen vermieden. Auch werden die Materialien sowie die Dimensionierung der reibenden Stellen so gewählt, dass wenig Abrieb entsteht. Die Partikelkontamination kann weiter auch dadurch verringert werden, dass Reibstellen gekapselt werden und z.B. durch Dichtungen abgedichtet werden. Es können außerdem Partikelaustrittsstellen unter Berücksichtigung der Luftströmung im Systemumfeld angeordnet werden, wobei eine Positionierung stromabwärts der Luftströmung von Vorteil ist. Eine weitere Möglichkeit, die Kontamination durch Partikel zu vermeiden, ist eine Vakuumabsaugung von Systemeinhausungen.

Durch die genannten Maßnahmen wird das Risiko der Partikelabgabe reduziert. Vorteilhaft ist jedoch eine zusätzliche Partikelkontrolle, da z.B. ein Verschleiß an Dichtungen zu Partikelemission führen kann. Auch können durch Partikelkontrollen Defekte detektiert werden, wenn diese mit einem erhöhten Abrieb einhergehen.

Eine solche Überwachung kann beispielsweise dadurch geschehen, dass manuell Stichproben mit optischen Partikelzählern vermessen werden. Die manuelle Messung hat jedoch die Nachteile, dass sie sehr kosten- und zeitintensiv ist, insbesondere was Aufbau, Transport-und Ankleidung des Personals betrifft. Außerdem ermöglicht sie keine kontinuierliche Überwachung, sondern nur eine stichprobenartige Messung. Auch ist normalerweise keine Messung während des Betriebs möglich. Da bei der Messung Personal notwendig ist, ist eine solche Messung nur bedingt in Anlagen integrierbar.

Eine weitere Möglichkeit ist eine Online-Überwachung, bei welcher die Partikelkontamination an vorgegebenen Orten in regelmäßigen Zeitabständen vermessen wird. In einem System nach dem Stand der Technik kann hierbei an der zu vermessenden Stelle eine Öffnung eines Ansaugschlauches untergebracht sein. Der Schlauch wird dann aus der Apparatur, in welcher die Messung stattfindet, herausgeführt und außerhalb die abgesaugte Luft mit einem Partikelzähler gemessen.

Es können hierbei Schläuche zu einer Vielzahl von Messstellen hingeführt werden, die außerhalb der zu vermessenden Apparatur mit einem einzigen Messzähler vermessen werden. Nach dem Stand der Technik weist ein solcher Messzähler einen Messstellenumschalter auf, mit welchem Luft aus jeweils genau einer Luftansaugung bzw. einem Schlauch saugbar ist und zwischen den Schläuchen umgeschaltet werden kann. Diese Luft wird dann im Partikelzähler vermessen. Ein wesentlicher Nachteil einer solchen Vorrichtung ist jedoch, dass die zu vermessende Luft vor der eigentlichen Messung lange Wege innerhalb der Schläuche zurücklegen muss. Zusätzlich sind die Möglichkeiten, die Schläuche zu verlegen, stark begrenzt, da derartige Schläuche nicht in beliebig engen Windungen geführt werden können, keine Ecken aufweisen dürfen und nicht geknickt und mit Druck beaufschlagt werden dürfen. Auch kommt es bei beinahe jeder denkbaren Schlauchführung zu Partikelablagerungen innerhalb des Schlauches, wodurch die Messung verfälscht wird. Bei derartigen Messstellenumschaltern besteht außerdem die Gefahr von unkontrolliertem Partikeleintrag durch die Messstellenumschaltung. Lange Probenahmeschläuche führen zu einer Zeitverzögerung bei der Messung und die Steuerung und Datenerfassung erfordert einen hohen Aufwand. Unvermeidbar sind Totzeiten zwischen den Messungen während der Umschaltung zwischen den Messbereichen. Die Totzeit wächst hier proportional zur Anzahl der Messstellen. Bei Anwendungen in Pharmazie, Biologie oder radioaktiven Bereichen ist eine Kontamination des Messsystems, d.h. der Sonden, Schläuche, Umschalter und der Auswertungstechnik mit z.B. Keimen oder radioaktiven Stoffen unvermeidlich, wodurch ein hoher Wartungs- und Entsorgungsaufwand entsteht.

Eine Alternativmöglichkeit nach dem Stand der Technik besteht darin, direkt am Ort des Entstehens von Partikeln jeweils ein Partikelmesszähler unterzubringen. Nachteilig ist hierbei jedoch, dass Partikelmesszähler aufgrund ihrer notwendigen Komponenten eine gewisse Mindestbaugröße aufweisen. Darüberhinaus sind Partikelmesszähler sehr teuer, so dass eine Vermessung an mehreren Stellen kostenintensiv ist. Sofern derartige Partikelmesszähler in Sicherheitsbereichen, wie beispielsweise explosionsgefährdeten Bereichen oder sterilen bzw. kontaminierten Bereichen zum Einsatz kommen, ist ein hoher Aufwand bei Wartung und Entsorgung sowie zur evtl. Abkapselung der Partikelmesszähler notwendig. Relevant ist dies insbesondere in der Pharmazie, Bioverfahrenstechnik oder in radioaktiv kontaminierten Bereichen.

Die DE 35 34 973 A1 beschreibt ein Durchflussimpulsfotometer zur Bestimmung von Streu- und/oder Fluoreszenzlicht von durch eine Kapillare strömenden Partikeln. Es weist einen selbstansaugenden, über eine flexible Anschlussleitung an einer Messapparatur angeschlossenen Messkopf auf. Der Messkopf kann eine Hohlspiegelanordnung oder eine Ulbrichtkugel aufweisen und bei hydrodynamischer Fokussierung nach dem Mantelstromprinzip dem Mantelstrom einen Drall aufprägen, der die Fokussierung stabilisiert.

Es ist Aufgabe der vorliegenden Erfindung, die vorgenannten Probleme des Standes der Technik zu überwinden.

Diese Aufgabe wird gelöst durch den Partikelmesskopf nach Anspruch 1, die Partikelmessvorrichtung nach Anspruch 11 sowie das Partikelmessverfahren nach Anspruch 13. Die jeweiligen abhängigen Ansprüche geben vorteilhafte Ausgestaltungen des Partikelmesskopfes, der Partikelmessvorrichtung und des Partikelmessverfahrens an.

Erfindungsgemäß wird zunächst ein Partikelmesskopf vorgeschlagen. Dieser Partikelmesskopf weist einen Messbereich auf, in welchen ein zu vermessendes Fluid einbringbar ist. Unter Fluid wird hier jede fließfähige Substanz verstanden, vorzugsweise jedoch Luft, Gas oder Flüssigkeit.

Der erfindungsgemäße Partikelmesskopf weist nun zumindest eine erste Lichtführungsvorrichtung auf, mit welcher Licht in den Messbereich führbar ist. Dabei wird das Licht unter Änderung seiner Hauptstrahlrichtung in den Messbereich geführt, geleitet oder gelenkt. Das Licht tritt dann in einer ersten Richtung in den Messbereich ein. Unter der Änderung der Hauptstrahlrichtung wird hier verstanden, dass das Licht, welches aus einer Lichtquelle austritt, nicht auf geradem Wege in den Messbereich eintritt, sondern vor Eintritt in den Messbereich zumindest einmal seine Richtung ändert, wobei die Richtung durch die Hauptstrahlrichtung eines aus der Lichtquelle austretenden Strahlbündels bestimmt wird.

Der erfindungsgemäße Partikelmesskopf weist außerdem zumindest eine zweite Lichtführungsvorrichtung auf, mit der Licht unter Änderung seiner Hauptstrahlrichtung aus dem Messbereich abführbar, ablenkbar oder ableitbar ist. Das Licht wird hierbei aus einer zweiten Richtung aus dem Messbereich abgeführt, abgelenkt oder abgeleitet. Im Folgenden sollen die Begriffe "abführen", "ablenken" und "ableiten" synonym verwendet werden. Die Änderung der Hauptstrahlrichtung wird hier wie bezüglich der ersten Lichtführungsvorrichtung erläutert verstanden.

Die erste Richtung der Lichteinstrahlung kann gleich der zweiten Richtung der Lichtabführung, d.h. der Messrichtung, sein. In diesem Fall ist die Messung eine Streulichtmessung des zurückgestreuten Lichts. Die erste Richtung kann auch gegenüber der zweiten Richtung um 180° versetzt sein, d.h. die erste Richtung kann der zweiten Richtung entgegengesetzt angeordnet sein. In diesem Falle kann die Messung ebenfalls eine Streulichtmessung des vorwärts gestreuten oder gebeugten Lichts sein, sie kann aber auch eine Extinktionsmessung sein. Grundsätzlich ist es möglich, dass die erste Richtung gegenüber der zweiten Richtung einen Winkel von 0° bis 180°, insbesondere von 20° bis 160°, aufweist.

Besonders bevorzugt ist, wenn die erste Richtung gegenüber der zweiten Richtung um 90° versetzt ist, da in diesem Falle eine besonders hohe Messgenauigkeit erreicht wird und besonders kleine Partikel messbar sind. In diesem Falle handelt es sich um eine Streulichtmessung.

Erfindungsgemäß weisen die erste und die zweite Lichtführungsvorrichtung zumindest einen Lichtwellenleiter auf oder sind zumindest ein Lichtwellenleiter. Ein solcher Lichtwellenleiter kann eine Glasfaser sein oder aber auch ein Hohlwellenleiter oder ein innenverspiegeltes Rohr. Ein Ende dieses Lichtwellenleiters grenzt in diesem Falle also direkt oder über andere optische Bauteile an den Messbereich, während ein anderes Ende des Lichtwellenleiters an die Lichtquelle, den Detektor bzw. eine Auswertevorrichtung grenzt, welche bevorzugt aber nicht Teil des Partikelmesskopfes sind.

Erfindungsgemäß weist die Lichtleitvorrichtung zumindest einen Spiegel, und/oder mindestens ein Prisma auf. Vorzugsweise lenkt der Spiegel, und/oder das Prisma das Licht hierbei um 90° ab. Hierdurch kann aus dem Messbereich in einer Messebene, die durch die erste und zweite Richtung aufgespannt wird, austretendes Licht in einer zur Messebene senkrecht stehenden Richtung abgeleitet werden, wodurch die Messebene klein gehalten werden kann. Da die Ausdehnung der Messebene wichtig für die Abmessung des Partikelmesskopfes ist, ist hierdurch eine besondere Verkleinerung des Partikelmesskopfes möglich.

Erfindungsgemäß sind der Spiegel und/oder das Prisma als den Messbereich umlaufender Ring ausgeführt sind, dessen dem Messbereich zugewandter Rand gegenüber der Messebene um 45° abgeschrägt ist. In diesem Falle können ein Spiegel der ersten Lichtführungsvorrichtung und der zweiten Lichtführungsvorrichtung als gemeinsames Bauteil durch diesen Ring ausgeführt sein. Die abgeschrägte Fläche des Rings ist hier vorzugsweise verspiegelt oder spiegelnd.

Besonders bevorzugt ist es, wenn die erste Lichtführungsvorrichtung zumindest einen Lichtwellenleiter und zumindest einen Spiegel, mindestens eine gebogene Faser und/oder mindestens ein Prisma aufweist. Bevorzugterweise wird dann aus einer Lichtquelle in den Messbereich geführtes Licht zunächst durch den Lichtwellenleiter geleitet bzw. geführt und dann nach dem Austreten aus dem Lichtwellenleiter über den Spiegel bzw. das Prisma in den Messbereich abgelenkt. Der Spiegel bzw. das Prisma ist hier also im Lichtweg zwischen dem Lichtwellenleiter und dem Messbereich angeordnet.

Entsprechend weist vorzugsweise auch die zweite Lichtführungsvorrichtung zumindest einen Lichtwellenleiter und zumindest einen Spiegel und/oder Prisma auf. Besonders bevorzugt wird hier das aus dem Messbereich abgeleitete Licht zunächst durch den Spiegel bzw. das Prisma abgelenkt und dann in den Lichtwellenleiter geführt. Vorzugsweise lenkt also der Spiegel das aus dem Messbereich austretende Licht in das eine Ende des Lichtwellenleiters ab. Über den Lichtwellenleiter wird das Licht dann zu einem Detektor geleitet. Wiederum ist also der Spiegel bzw. das Prisma im Lichtweg zwischen dem Messbereich und dem Lichtwellenleiter angeordnet.

Durch die Kombination von Lichtwellenleiter mit Spiegel oder Prisma wird eine besondere Reduzierung der Baugröße erreicht, da hier der Lichtwellenleiter, der ja nicht beliebig eng führbar ist, keine zusätzlichen Schlaufen durchlaufen muss, sondern im wesentlichen gerade zum Spiegel oder zum Prisma hingeführt werden kann.

Erfindungsgemäß wird das Licht aus der ersten Lichtführungsvorrichtung dem Messbereich über zumindest eine Blende zugeführt. Hierdurch kann der Messbereich ein besonders enges, d.h. wenig divergentes Lichtbündel zugeführt werden.

Erfindungsgemäß wird zusätzlich oder alternativ auch das aus dem Messbereich abgeführte Licht der zweiten Lichtführungsvorrichtung über zumindest eine Blende zugeführt, wodurch Störeinflüsse von außerhalb des Messbereichs vermindert werden können.

Vorteilhaft weist der Partikelmesskopf also zumindest eine Blende auf, die zwischen dem Messbereich und einem Spiegel der ersten Lichtführungsvorrichtung angeordnet ist und/oder zumindest eine Blende, die zwischen dem Messbereich und einem Spiegel und/oder Prisma der zweiten Lichtführungsvorrichtung angeordnet ist.

Vorzugsweise weist der erfindungsgemäße Partikelmesskopf zumindest eine Absaugvorrichtung auf, mit der im Messbereich ein Unterdruck gegenüber einer Umgebung des Partikelmesskopfes erzeugbar ist und/oder zumindest ein Fluid durch den Messbereich saugbar ist. Die Absaugvorrichtung muss hierbei nicht eine Pumpe enthalten, durch welche der Unterdruck tatsächlich erzeugt wird, es reicht vielmehr, wenn die Absaugvorrichtung einen an einem anderen Ort erzeugten Unterdruck bis zum Messbereich führt. Besonders vorteilhafterweise ist eine solche Absaugvorrichtung ein Hohlleiter wie beispielsweise ein Schlauch, dessen eines Ende an den Messbereich grenzt, während sein anderes Ende an eine Unterdruckquelle bzw. eine Fluidsenke, wie beispielsweise eine Pumpe, grenzt. Der Hohlleiter kann auch ein Kanal in eine Komponente einer durch den Partikelmesskopf überwachten Anlage sein, wie z.B. einem Roboterarm. Es ist besonders bevorzugt, wenn die Lichtführungsvorrichtungen innerhalb dieses Hohlleiters verlaufen. In diesem Falle kann der Partikelmesskopf nur über diesen Hohlleiter an eine andernorts angeordnete Auswerteeinheit angeschlossen sein.

Ebenso ist es möglich, dass ein Überdruck in der Umgebung genutzt wird, durch den zumindest ein Fluid durch den Messbereich bzw. die Messkammer transportiert wird.

Es ist bevorzugt, wenn der Partikelmesskopf ein Gehäuse aufweist, in dessen Innerem der Messbereich vorliegt. Das Gehäuse weist dann zumindest eine Öffnung zu einer zu vermessenden Umgebung auf, durch welche zu vermessendes Fluid in den Messbereich im Inneren des Partikelmesskopfes eindringen kann. In dem Gehäuse sind dann vorzugsweise die genannten Blenden, Spiegel und Prismen, sowie vorzugsweise jeweils ein Ende der Lichtwellenleiter angeordnet. Die genannte Absaugvorrichtung ist in diesem Falle vorzugsweise aus der gleichen Richtung wie die Lichtführungsvorrichtung oder die Lichtwellenleiter an das Gehäuse herangeführt. Die Öffnung zum Eintritt des Fluids kann dann auf einer entgegengesetzten Seite des Gehäuses angeordnet sein.

Besonders bevorzugt ist die folgende Ausgestaltung des Partikelmesskopfes gemäß der Erfindung. Hierbei kann der Partikelmesskopf einen Hohlleiter als Absaugvorrichtung aufweisen, der an ein Gehäuse herangeführt ist, in dessen Innerem der Messbereich angeordnet ist. Der Hohlleiter mündet hierbei in das Innere des Gehäuses. Auf einer gegenüberliegenden Seite der Einmündung des Hohlleiters ist eine Öffnung des Gehäuses angeordnet, durch welche Fluid in den Messbereich eindringen kann. Im Inneren des Hohlleiters sind ein erster Lichtwellenleiter der ersten Lichtführungsvorrichtung sowie ein zweiter Lichtwellenleiter der zweiten Lichtführungsvorrichtung geleitet, die in das Gehäuse eintreten. Gegenüber Ein- bzw. Austrittsflächen der Lichtwellenleiter im Gehäuse sind Spiegel angeordnet, die vorzugsweise gegenüber der Austritts- bzw. Eintrittsrichtung der Lichtwellenleiter um 45° geneigt sind, so dass Licht über sie über einen Winkel von 90° aus bzw. in den Messbereich einstrahlbar bzw. abführbar ist.

Das genannte Gehäuse kann vorteilhafterweise durch Spritzguss herstellbar sein, was zu besonders geringen Kosten führt.

Die Absaugvorrichtung kann auch als einfaches Loch im Gehäuse ausgestaltet sein, an welches dann eine Pumpe, auch über einen Hohlleiter, anschließbar ist.

Die Größe des Gehäuses und/oder des Messbereiches können im Wesentlichen der Größe des Hohlleiters entsprechen.

Der Hohlleiter kann auch an einem Roboter in dessen Versorgungsleitungen geführt werden.

Der erfindungsgemäße Partikelmesskopf ist besonders auch zum Einsatz in Robotern geeignet, da der Hohlleiter und die Lichtführungsvorrichtungen bezüglich ihrer Krümmung keinen wesentlichen Beschränkungen unterworfen sind. In einer besonders vorteilhaften Ausgestaltung kann der Hohlleiter als Kanal in Bauteilen eines Roboters ausgestaltet sein, so z.B. als Kanal in einem Arm des Roboters.

Der Partikelmesskopf kann außerdem mindestens eine Filtervorrichtung vor der Absaugvorrichtung, vorzugsweise zwischen Messbereich und Absaugvorrichtung aufweisen, wodurch in kontaminierten Bereichen gemessen werden kann, ohne dass kontaminiertes Fluid zur Auswerteeinheit gelangt. Die Auswerteeinheit bleibt also sauber und nur der Messkopf wird verunreinigt. Der Messkopf kann ohne großen Kostenaufwand als Einwegartikel ausgestaltet sein. Da er nicht über elektrische und bewegte Komponenten verfügt, kann er außerdem auch einfach dekontaminiert werden.

Erfindungsgemäß wird außerdem eine Partikelmessvorrichtung vorgeschlagen, welche zumindest einen Partikelmesskopf, wie er vorstehend beschrieben wurde, aufweist. Die Partikelmessvorrichtung weist außerdem zumindest eine Lichtquelle auf, mit der Licht in die erste Lichtführungsvorrichtung des zumindest einen Partikelmesskopfes einstrahlbar ist. Sofern mehrere Partikelmessköpfe vorgesehen sind, können diese entweder jeder eine eigene Lichtquelle aufweisen oder es können mehrere oder alle Partikelmessköpfe durch die gleiche Lichtquelle mit Licht versorgt werden.

Darüberhinaus weist die erfindungsgemäße Partikelmessvorrichtung zumindest einen Detektor auf, mit dem Licht detektierbar und/oder messbar ist, welches aus einer zweiten Lichtführungsvorrichtung des oder der Partikelmessköpfe austritt.

Vorzugsweise weist die Partikelmessvorrichtung außerdem eine Saugvorrichtung auf, mit der in der Absaugvorrichtung des oder der Partikelmessköpfe der Unterdruck erzeugbar ist und/oder Fluid aus der oder durch die Absaugvorrichtung saugbar ist. Vorzugsweise ist die Saugvorrichtung eine für alle Partikelmessköpfe gemeinsame Saugvorrichtung.

Die erfindungsgemäße Partikelmessvorrichtung weist vorzugsweise zwei, drei, vier oder mehr, besonders bevorzugt eine Vielzahl von oben beschriebenen Partikelmessköpfen auf. Es kann hierbei jedem Partikelmesskopf eine eigene Lichtquelle und/oder ein eigener Detektor zugeordnet sein oder es können mehrere oder alle Partikelmessköpfe über eine gemeinsame Lichtquelle mit Licht versorgt werden und über einen gemeinsamen Detektor ausgewertet werden. Letzterer Fall hat den Vorteil besonders geringer Kosten des Systems.

In der Partikelmessvorrichtung können eine Vielzahl von Schnittstellen zu Partikelmessköpfen vorgesehen sein, wobei solche Schnittstellen, die nicht mit einem Partikelmesskopf ausgestattet oder verbunden sind, einfach mechanisch verschlossen werden können.

Bevorzugterweise lässt sich der Partikelmesskopf über ein Stecksystem aus einzelnen Bestandteilen montieren.

Vorzugsweise wird der Partikelmesskopf mit einer Auswertungseinheit der Partikelmessvorrichtung über ein Stecksystem verbunden, was eine besonders einfache Montage und hohe Messsicherheit gewährleistet und durch ungeübtes Personal beherrschbar ist. Das System ist durch einfaches Zusammenstecken von nur drei bis vier Komponenten herstellbar und Umkonfiguration und Änderung kann einfach und ohne große Kosten schnell durchgeführt werden.

Mit der erfindungsgemäßen Partikelmessvorrichtung ist ein erfindungsgemäßes Verfahren zur Messung des Partikelgehalts eines Fluids durchführbar. Hierbei wird Fluid in den Messbereich eingebracht, über die erste Lichtführungsvorrichtung Licht in den Messbereich eingestrahlt und über die zweite Lichtführungsvorrichtung Licht aus dem Messbereich abgeleitet. Das Licht wird hierbei über eine erste Lichtquelle in die erste Lichtführungsvorrichtung zumindest eines Partikelmesskopfes eingestrahlt. Das aus der zweiten Lichtführungsvorrichtung abgeleitete Licht wird durch zumindest einen Detektor detektiert.

Mit dem erfindungsgemäßen Verfahren können in der erfindungsgemäßen Partikelmessvorrichtung mehrere oder eine Vielzahl von Messstellen gleichzeitig vermessen werden. Hierzu wird an jeder Messstelle ein Partikelmesskopf untergebracht. Die Messungen können in der Partikelmessvorrichtung simultan durchgeführt werden, wobei besonders bevorzugt jeder Partikelmesskopf über eine eigene Lichtquelle mit Licht versorgt wird und vorzugsweise alle Messköpfe mit einem gemeinsamen Detektor ausgewertet werden.

Sofern nun der Detektor eine Überschreitung des gemeinsamen Messsignals aller Partikelmessköpfe über einen vorgegebenen Grenzwert feststellt, kann die Partikelmessvorrichtung ein Verfahren durchführen, in welchem festgestellt wird, welcher Partikelmesskopf zur Erhöhung des Signals geführt hat. Hierzu kann beispielsweise nacheinander jeder Partikelmesskopf einzeln mit Licht versorgt werden und dann durch den gemeinsamen Detektor nur das Signal dieses gerade mit Licht versorgten Partikelmesskopfes gemessen werden. Es wird dann entschieden, ob dieses Messsignal über einem Grenzwert für einen einzelnen Partikelmesskopf liegt oder darunter. In einem nächsten Schritt werden dann nur der oder die Partikelmessköpfe mit Licht versorgt, deren Messsignal den Grenzwert überschritten haben.

Durch dieses Verfahren ist eine kontinuierliche Messung an einer Vielzahl von Messpunkten möglich. Es entstehen keine Totzeiten durch Umschalten zwischen einzelnen Messpunkten. Dennoch kann bei Vorliegen einer Abweichung der Partikelfracht von einem Sollwert eine genaue Vermessung der Abweichung erfolgen, indem dann nur mit diesem die Abweichung aufweisenden Partikelmesskopf gemessen wird. Durch das Umschalten kann so die Partikelquelle lokalisiert bzw. geortet werden.

Erfindungsgemäß werden vorzugsweise Partikel im Mikrometerbereich oder Nanometerbereich vermessen, d.h. vorzugsweise Partikel mit einer Größe ≤ 1000 µm, vorzugsweise ≤ 700 µm, besonders bevorzugt ≤ 500 µm, besonders bevorzugt ≤ 100 µm, besonders bevorzugt ≤ 50 µm, besonders bevorzugt ≤ 1 µm, besonders bevorzugt ≤ 500 nm, besonders bevorzugt ≤ 100 nm. Vorzugsweise werden erfindungsgemäß Partikel vermessen.

Die erfindungsgemäßen Partikelmessköpfe sind klein, kostengünstig und jederzeit austauschbar. Dadurch sind sie vorteilhaft in kontaminierten Bereichen einsetzbar, ohne dass aufwendige Dekontamination notwendig wäre. Der erfindungsgemäße Partikelmesskopf kann ohne großen Platzaufwand nahe an Partikelquellen untergebracht werden. Die geringen Kosten ermöglichen eine Überwachung der Partikelfracht an einer Vielzahl von Messstellen. Dadurch, dass elektronische und bewegte Komponenten weit abseits der Messstelle untergebracht werden können, ist auch der Einsatz in explosionsgefährdeten Bereichen möglich. Das System ist modular ausführbar und es können ohne großen Aufwand weitere Messstellen mit Partikelmessköpfen ausgestattet werden. Das System ist außerdem ohne Expertise einfach handhabbar und nachträglich in bestehende Systeme integrierbar.

Die Entfernung zwischen dem Ort der Messung und der Auswerteeinheit spielt in der Erfindung keine wesentliche Rolle, da die Messung im Messbereich direkt vor Ort durchgeführt wird und bei der Ableitung des Fluides auftretende Änderungen in der Partikelfracht keine Auswirkungen auf das Messergebnis mehr haben. Entsprechend kann auch der Hohlleiter freier geformt werden.

Besonders bevorzugt lässt sich das erfindungsgemäße System zur Überwachung einsetzen, wobei nicht unbedingt eine Vermessung und/oder Katalogisierung der Partikel erfolgen muss, jedoch erfolgen kann.

Durch die erfindungsgemäße Änderung der Hauptstrahlrichtung beim Einstrahlen des Lichts in den Messbereich und beim Messen wird eine erhebliche Verkleinerung der Messvorrichtung erreicht, da am Ort der Messung selbst nur noch der Messbereich sowie eine Austrittsstelle der ersten Lichtführungsvorrichtung sowie eine Eintrittsstelle der zweiten Lichtführungsvorrichtung untergebracht sein müssen.

Das Licht wird von der Lichtquelle zum Messbereich geleitet und das aus dem Messbereich abgeleitete Licht wird zu einem Detektor geleitet, wobei Lichtquelle und Detektor zwar zum Partikelmesskopf gehören können, jedoch nicht müssen. Vorteilhafterweise gehören Lichtquelle und Detektor nicht zum Partikelmesskopf, sondern zu einer Partikelmessvorrichtung, wie sie unten beschrieben wird.

Im Folgenden sollen einige vorteilhafte optionale Aspekte der Erfindung aufgeführt werden.

In dem Partikelmesskopf kann in einer vorteilhaften Ausgestaltung eine Streulichtmessung durchführbar sein.

Das genannte Fluid kann vorteilhaft Luft, Gas oder Flüssigkeit sein.

Die genannte Absaugvorrichtung kann vorteilhaft einen Hohleiter oder Schlauch aufweisen oder sein.

Das Licht kann vorteilhaft Laserlicht sein.

Mit dem Partikelmesskopf können vorteilhaft Partikel ≤ 1 mm, bevorzugt ≤ 500 µm, besonders bevorzugt ≤ 100 µm, besonders bevorzugt ≤ 50 µm, besonders bevorzugt ≤ 1 µm, besonders bevorzugt ≤ 500 nm, besonders bevorzugt ≤ 100 nm, besonders bevorzugt ≤ 50 nm erfassbar sein.

Der erfindungsgemäße Partikelmesskopf kann vorteilhaft zumindest eine Saugvorrichtung, mit der in der Absaugvorrichtung des zumindest einen Partikelmesskopfes der Unterdruck erzeugbar ist und/oder das Fluid aus der oder durch die Absaugvorrichtung saugbar ist, aufweisen.

Bei der erfindungsgemäßen Partikelmessvorrichtung kann vorteilhaft jedem der zumindest zwei Partikelmessköpfe eine eigene Lichtquelle zugeordnet sein, durch die Licht in die erste Lichtführungsvorrichtung des entsprechenden Partikelmesskopfes einstrahlbar ist.

Vorteilhaft kann die erfindungsgemäße Partikelnessvorrichtung durch einen Detektor gekennzeichnet sein, mit dem Licht aus den zweiten Lichtführungsvorrichtungen mehrerer oder aller Partikelmessköpfe detektierbar ist.

In der erfindungsgemäßen Partikelmessvorrichtung kann vorteilhaft jedem Partikelmesskopf ein Detektor zugeordnet sein.

Durch die Entfernung von Lichtquelle, Detektor sowie auch einer Auswerte-elektronik von der eigentlichen Messstelle kann durch die erfindungsgemäße Anordnung die Messung unter einem sehr geringen Platzaufwand an der eigentlichen Messstelle erfolgen. Der erfindungsgemäße Partikelmesskopf lässt sich sehr einfach an den Messstellen unterbringen und ist außerdem ausgesprochen kostengünstig, da er die kostenintensiven Bestandteile der Lichtquelle, des Detektors und der Auswerteelektronik nicht enthält. Der Partikelmesskopf kann daher als Einwegartikel konzipiert werden, wodurch er besonders günstig in biologisch oder radioaktiv kontaminierten Bereichen einsetzbar ist. Eine anschließende Dekontaminierung ist nicht notwendig.

Der Partikelmesskopf ist auch besonders geeignet zur Anwendung in explosionsgefährdeten Bereichen, da er selbst keinerlei elektronische oder bewegliche Komponenten enthält. Die Lichtquelle, der Detektor und die Auswerteelektronik können weit abseits der explosions- bzw. kontaminationsgefährdeten Bereiche angeordnet werden.

Im Folgenden soll die erfindungsgemäße Vorrichtung anhand von Figuren beispielhaft erläutert werden.

Es zeigt
- Figur 1: einen erfindungsgemäßen Partikelmesskopf,
- Figur 2: einen erfindungsgemäßen Partikelmesskopf mit einem Filter und
- Figur 3: eine erfindungsgemäße Partikelmessvorrichtung.

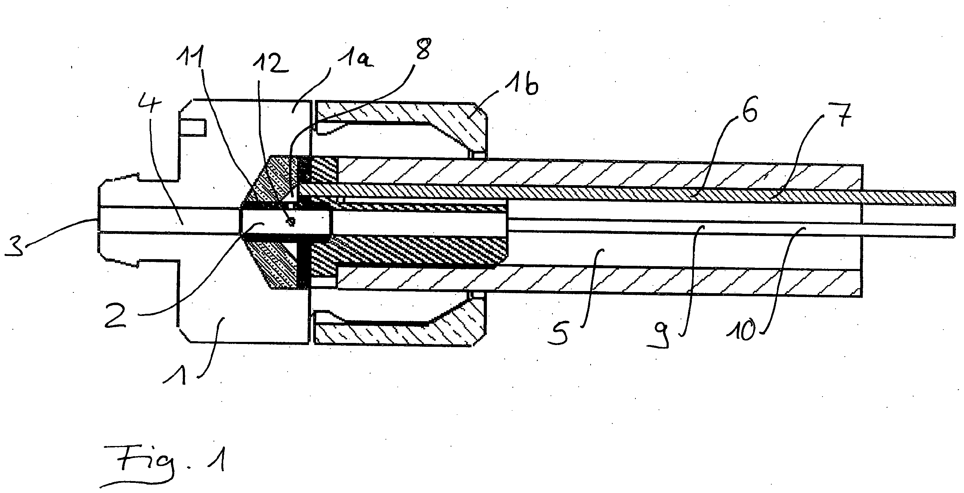

Figur 1 zeigt einen Partikelmesskopf gemäß der vorliegenden Erfindung. Hierbei ist in einem Gehäuse 1 ein Messbereich 2 angeordnet, in dem partikelhaltiges Fluid vermessen werden kann. Das Fluid wird über eine Ansaugöffnung 3 in einen Ansaugkanal 4 gesaugt und erreicht dann den Messbereich 2. Die Ansaugung erfolgt über eine Ansaugvorrichtung 5, die im vorliegenden Beispiel durch einen Hohlleiter 5 in Form eines Schlauches 5 gebildet wird. Im vorliegenden Beispiel verlässt das Fluid den Messbereich 2 durch den Schlauch 5.

Der erfindungsgemäße Partikelmesskopf weist eine erste Lichtführungsvorrichtung 6 auf, die ihrerseits eine Lichtleitfaser 7 sowie einen Umlenkspiegel 8 aufweist. Der Umlenkspiegel 8 ist hierbei ein den Messbereich 2 umlaufender Ring, dessen eine, dem Messbereich zugewandte, Seite verspiegelt beschichtet ist oder spiegelt. Der gezeigte Partikelmesskopf weist außerdem eine zweite Lichtführungsvorrichtung 9 auf, welche eine zweite Lichtleitfaser 10 sowie den Spiegelring 8 als Umlenkspiegel aufweist. Der Spiegel 8 kommt hierbei also als Spiegel der ersten wie auch der zweiten Lichtführungsvorrichtung zum Einsatz. Licht wird nun durch die erste Lichtführungsvorrichtung 6 dem Messbereich 2 aus einer ersten Richtung zugeführt. Die Zuführung erfolgt hierbei über die Lichtleitfaser, den Spiegel 8 sowie eine Blende 11 zwischen Spiegel 8 und Messbereich 2. Das im Messbereich 2 gestreute Licht wird über eine Blende 12 über den Spiegelring 8 und die Lichtleitfaser 10 in einer zweiten Richtung abgeleitet. Die zweite Richtung ist hierbei gegenüber der ersten Richtung um 90° versetzt. Sie könnte aber auch mit der ersten Richtung identisch sein oder um 180° gegenüber der ersten Richtung versetzt sein.

Die Lichtleitfaser 7 der ersten Lichtführungsvorrichtung 6 sowie die Lichtleitfaser 10 der zweiten Lichtführungsvorrichtung 9 sind innerhalb des Hohlleiters 5 der Absaugvorrichtung geführt und verlaufen zueinander und zur Absaugvorrichtung 5 parallel.

Der gezeigte Partikelmesskopf ist aus zusammensteckbaren Bestandteilen aufgebaut. Hierbei ist das Gehäuse 1 aus zwei Teilen 1a und 1b zusammengesteckt. Der Hohlleiter 5 ist von unten in den Gehäuseteil 1b eingesteckt. Gehäuseteil 1a rastet in Gehäuseteil 1b ein. Im Inneren des Gehäuseteils 1a ist der Spiegelring 8 eingesteckt sowie ein zur Richtung der Fluidführung im Ansaugkanal 4 paralleles Röhrchen, in dessen Inneren der Messbereich 2 vorliegt, und in dessen Wandung die Blenden 11 und 12 als Löcher ausgeführt sind.

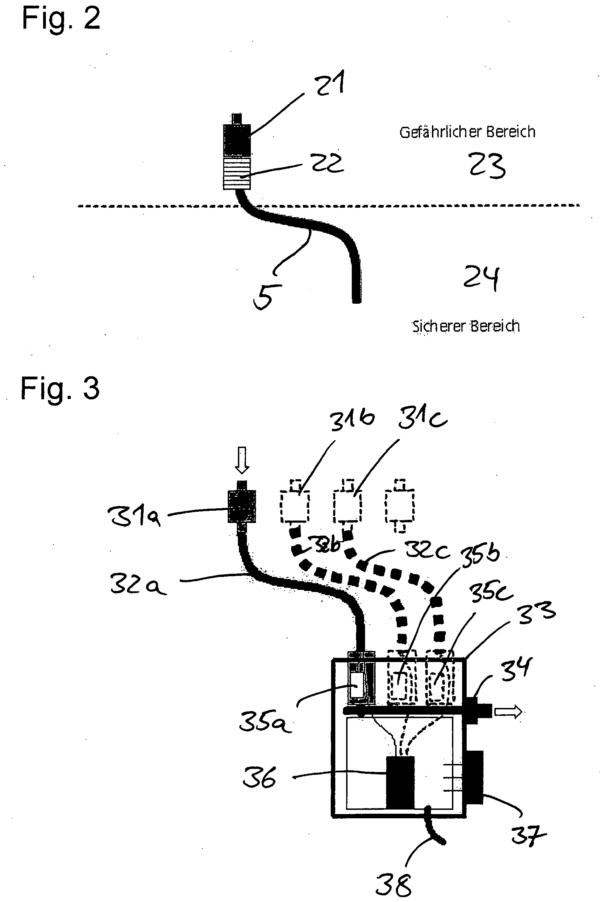

Figur 2 zeigt einen erfindungsgemäßen Partikelmesskopf mit einer Messzelle 21, deren Aufbau dem in Figur 1 gezeigten Partikelmesskopf entspricht, sowie einen zwischen Absaugvorrichtung 5 und dem im Inneren der Messzelle 21 angeordneten Messbereich 2 angeordneten Filter 22. Mittels eines solchen Messkopfes kann eine Partikelmessung in einem gefährdeten Bereich 23 durchgeführt werden, wobei jedoch alle elektrischen und bewegten Komponenten in einem sicheren Bereich 24 angeordnet sein können. Wenn die Gefährdung des Bereichs 23 in einer Kontamination liegt, kann der Filter 23 die Entfernung der kontaminierenden Materialien aus der durch die Ansaugvorrichtung 5 angesaugten Luft bewirken, so dass im sicheren Bereich nur sauberes, nicht kontaminiertes Fluid ankommt.

Figur 3 zeigt eine erfindungsgemäße Partikelmessvorrichtung mit drei Partikelmessköpfen 31a, 31b, 31c, wie sie in Figur 1 beschrieben wurden. Die Partikelmessköpfe 31a bis 31C sind über Hohlleiter, im vorliegenden Fall Schläuche, 32a, 32b, 32c mit einer Auswertungseinheit 33 verbunden. Die Auswertungseinheit 33 bewirkt die Versorgung und Auswertung der Partikelmessköpfe 31a bis 31c. Hierzu weist sie eine Saugvorrichtung 34 auf, mit welcher ein Unterdruck in den Schläuchen 32a bis 32c und damit in den Messbereichen der Partikelmessköpfe 31a bis 31c erzeugbar ist. Darüberhinaus weist die Auswerteeinheit 33 für jeden Partikelmesskopf 31a bis 31c eine Laserdiode 35a, 35b, 35c auf, mit welcher Licht in die erste Lichtführungseinheit der jeweiligen Partikelmessköpfe 31a bis 31c einführbar ist. Die Auswerteeinheit 33 weist außerdem einen Lichtdetektor 36 auf, welcher mit den zweiten Lichtführungsvorrichtungen aller Partikelmessköpfe 31a bis 31c verbunden ist und so eine gemeinsame Auswertung der Partikelmessköpfe ermöglicht. Der Lichtdetektor 36 ist mit einer IT-Schnittstelle 37 verbunden, über welche eine weitere Auswerteelektronik an die Auswerteeinheit 33 oder an eine übergeordnete Anlagensteuerung angeschlossen werden kann. Die Auswerteeinheit 33 weist außerdem eine Stromzuführung 38 auf. Die Laser 35a bis 35c können unabhängig voneinander geschaltet werden, so dass auch einzelne der Partikelmessköpfe 31a bis 31c mit Licht versorgbar sind. Eine Messung im Detektor 36 findet jeweils nur von jenen Messköpfen 31a bis 31c statt, welche gerade mit Licht versorgt werden. Dadurch können die Messköpfe 31a bis 31c einzeln ausgewertet werden.

Partikelmesskopf kann daher als Einwegartikel konzipiert werden, wodurch er besonders günstig in biologisch oder radioaktiv kontaminierten Bereichen einsetzbar ist. Eine anschließende Dekontaminierung ist nicht notwendig.

Der Partikelmesskopf ist auch besonders geeignet zur Anwendung in explosionsgefährdeten Bereichen, da er selbst keinerlei elektronische oder bewegliche Komponenten enthält. Die Lichtquelle, der Detektor und die Auswerteelektronik können weit abseits der explosions- bzw. kontaminationsgefährdeten Bereiche angeordnet werden.

Im Folgenden soll die erfindungsgemäße Vorrichtung anhand von Figuren beispielhaft erläutert werden.

Es zeigt
- Figur 1: einen erfindungsgemäßen Partikelmesskopf,
- Figur 2: einen erfindungsgemäßen Partikelmesskopf mit einem Filter und
- Figur 3: eine erfindungsgemäße Partikelmessvorrichtung.

Figur 1 zeigt einen Partikelmesskopf gemäß der vorliegenden Erfindung. Hierbei ist in einem Gehäuse 1 ein Messbereich 2 angeordnet, in dem partikelhaltiges Fluid vermessen werden kann. Das Fluid wird über eine Ansaugöffnung 3 in einen Ansaugkanal 4 gesaugt und erreicht dann den Messbereich 2. Die Ansaugung erfolgt über eine Ansaugvorrichtung 5, die im vorliegenden Beispiel durch einen Hohlleiter 5 in Form eines Schlauches 5 gebildet wird. Im vorliegenden Beispiel verlässt das Fluid den Messbereich 2 durch den Schlauch 5.

Der erfindungsgemäße Partikelmesskopf weist eine erste Lichtführungsvorrichtung 6 auf, die ihrerseits eine Lichtleitfaser 7 sowie einen Umlenkspiegel 8 aufweist. Der Umlenkspiegel 8 ist hierbei ein den Messbereich 2 umlaufender Ring, dessen eine, dem Messbereich zugewandte, Seite verspiegelt beschichtet ist oder spiegelt. Der gezeigte Partikelmesskopf weist außerdem eine zweite Lichtführungsvorrichtung 9 auf, welche eine zweite Lichtleitfaser 10 sowie den Spiegelring 8 als Umlenkspiegel aufweist. Der Spiegel 8 kommt hierbei also als Spiegel der ersten wie auch der zweiten Lichtführungsvorrichtung zum Einsatz. Licht wird nun durch die erste Lichtführungsvorrichtung 6 dem Messbereich 2 aus einer ersten Richtung zugeführt. Die Zuführung erfolgt hierbei über die Lichtleitfaser, den Spiegel 8 sowie eine Blende 11 zwischen Spiegel 8 und Messbereich 2. Das im Messbereich 2 gestreute Licht wird über eine Blende 12 über den Spiegelring 8 und die Lichtleitfaser 10 in einer zweiten Richtung abgeleitet. Die zweite Richtung ist hierbei gegenüber der ersten Richtung um 90° versetzt. Sie könnte aber auch mit der ersten Richtung identisch sein oder um 180° gegenüber der ersten Richtung versetzt sein.

Die Lichtleitfaser 7 der ersten Lichtführungsvorrichtung 6 sowie die Lichtleitfaser 10 der zweiten Lichtführungsvorrichtung 9 sind innerhalb des Hohlleiters 5 der Absaugvorrichtung geführt und verlaufen zueinander und zur Absaugvorrichtung 5 parallel.

Der gezeigte Partikelmesskopf ist aus zusammensteckbaren Bestandteilen aufgebaut. Hierbei ist das Gehäuse 1 aus zwei Teilen 1a und 1b zusammengesteckt. Der Hohlleiter 5 ist von unten in den Gehäuseteil 1b eingesteckt. Gehäuseteil 1a rastet in Gehäuseteil 1b ein. Im Inneren des Gehäuseteils 1a ist der Spiegelring 8 eingesteckt sowie ein zur Richtung der Fluidführung im Ansaugkanal 4 paralleles Röhrchen, in dessen Inneren der Messbereich 2 vorliegt, und in dessen Wandung die Blenden 11 und 12 als Löcher ausgeführt sind.

Figur 2 zeigt einen erfindungsgemäßen Partikelmesskopf mit einer Messzelle 21, deren Aufbau dem in Figur 1 gezeigten Partikelmesskopf entspricht, sowie einen zwischen Absaugvorrichtung 5 und dem im Inneren der Messzelle 21 angeordneten Messbereich 2 angeordneten Filter 22. Mittels eines solchen Messkopfes kann eine Partikelmessung in einem gefährdeten Bereich 23 durchgeführt werden, wobei jedoch alle elektrischen und bewegten Komponenten in einem sicheren Bereich 24 angeordnet sein können. Wenn die Gefährdung des Bereichs 23 in einer Kontamination liegt, kann der Filter 23 die Entfernung der kontaminierenden Materialien aus der durch die Ansaugvorrichtung 5 angesaugten Luft bewirken, so dass im sicheren Bereich nur sauberes, nicht kontaminiertes Fluid ankommt.

Figur 3 zeigt eine erfindungsgemäße Partikelmessvorrichtung mit drei Partikelmessköpfen 31a, 31b, 31c, wie sie in Figur 1 beschrieben wurden. Die Partikelmessköpfe 31a bis 31C sind über Hohlleiter, im vorliegenden Fall Schläuche, 32a, 32b, 32c mit einer Auswertungseinheit 33 verbunden. Die Auswertungseinheit 33 bewirkt die Versorgung und Auswertung der Partikelmessköpfe 31a bis 31c. Hierzu weist sie eine Saugvorrichtung 34 auf, mit welcher ein Unterdruck in den Schläuchen 32a bis 32c und damit in den Messbereichen der Partikelmessköpfe 31a bis 31c erzeugbar ist. Darüberhinaus weist die Auswerteeinheit 33 für jeden Partikelmesskopf 31a bis 31c eine Laserdiode 35a, 35b, 35c auf, mit welcher Licht in die erste Lichtführungseinheit der jeweiligen Partikelmessköpfe 31a bis 31c einführbar ist. Die Auswerteeinheit 33 weist außerdem einen Lichtdetektor 36 auf, welcher mit den zweiten Lichtführungsvorrichtungen aller Partikelmessköpfe 31a bis 31c verbunden ist und so eine gemeinsame Auswertung der Partikelmessköpfe ermöglicht. Der Lichtdetektor 36 ist mit einer IT-Schnittstelle 37 verbunden, über welche eine weitere Auswerteelektronik an die Auswerteeinheit 33 oder an eine übergeordnete Anlagensteuerung angeschlossen werden kann. Die Auswerteeinheit 33 weist außerdem eine Stromzuführung 38 auf. Die Laser 35a bis 35c können unabhängig voneinander geschaltet werden, so dass auch einzelne der Partikelmessköpfe 31a bis 31c mit Licht versorgbar sind. Eine Messung im Detektor 36 findet jeweils nur von jenen Messköpfen 31a bis 31c statt, welche gerade mit Licht versorgt werden. Dadurch können die Messköpfe 31a bis 31c einzeln ausgewertet werden.

## Patentansprüche

1. Partikelmesskopf mit einem Messbereich (2), in den ein zu vermessendes Fluid einbringbar ist,
zumindest einer ersten Lichtführungsvorrichtung (6), mit der Licht unter Änderung seiner Hauptstrahlrichtung in den Messbereich (2) führbar ist, wobei das Licht durch die erste Lichtführungsvorrichtung (6) in einer ersten Richtung in den Messbereich (2) führbar ist, und zumindest einer zweiten Lichtführungsvorrichtung (9), mit der Licht unter Änderung seiner Hauptstrahlrichtung aus dem Messbereich (2) abführbar ist, wobei das Licht durch die zweite Lichtführungsvorrichtung (9) aus einer zweiten Richtung aus dem Messbereich (2) abführbar ist,
wobei die erste Lichtführungsvorrichtung (6) zumindest einen Lichtwellenleiter (7) und zumindest einen Spiegel (8) und/oder ein Prisma aufweist, wobei das in den Messbereich geführte Licht den Lichtwellenleiter (7) durchläuft und danach über den Spiegel und/oder das Prisma in den Messbereich (2) abgelenkt wird,
wobei die zweite Lichtführungsvorrichtung zumindest einen Lichtwellenleiter (10) aufweist,
**dadurch gekennzeichnet, dass** das aus dem Messbereich (2) abgeführte Licht zunächst durch den Spiegel (8) und/oder das Prisma aus dem Messbereich (2) in den Lichtwellenleiter (10) der zweiten Lichtführungsvorrichtung abgelenkt wird und dann diesen Lichtwellenleiter (10) durchläuft, dass der Spiegel (8) oder das Prisma als ein den Messbereich (2) umlaufender Ring mit einer schrägen, verspiegelten Innenfläche, die dem Messbereich (2) zugewandt ist, ausgeführt ist, wobei Licht aus der ersten Lichtführungsvorrichtung (6) über zumindest eine Blende (11) in den Messbereich (2) eingestrahlt wird und/oder Licht aus dem Messbereich (2) über zumindest eine Blende (12) in die zweite Lichtführungsvorrichtung (9) eintritt.

2. Partikelmesskopf nach dem vorhergehenden Anspruch, **dadurch gekennzeichnet, dass** der Versatz der ersten Richtung gegenüber der zweiten Richtung zwischen 0° und 180°, insbesondere von 20° bis 160°, beträgt, oder
dass die erste Richtung gegenüber der zweiten Richtung um 90° versetzt ist, oder
dass die erste Richtung gleich der zweiten Richtung ist.

3. Partikelmesskopf nach einem der vorhergehenden Ansprüche, **dadurch gekennzeichnet, dass** die erste (6) und/oder die zweite (9) Lichtführungsvorrichtung zumindest einen Lichtwellenleiter (7, 10) aufweist oder ist, wobei vorzugsweise der zumindest eine Lichtwellenleiter (7, 10) eine Glasfaser, ein Hohlwellenleiter oder ein innenverspiegeltes Rohr ist.

4. Partikelmesskopf nach einem der vorhergehenden Ansprüche, **dadurch gekennzeichnet, dass** die erste (6) und/oder die zweite (9) Lichtführungsvorrichtung zumindest einen Spiegel (7) und/oder zumindest ein Prisma aufweist, mit dem vorzugsweise Licht um 90° ablenkbar ist.

5. Partikelmesskopf nach einem der vorhergehenden Ansprüche, **gekennzeichnet durch** zumindest eine Absaugvorrichtung (5), mit der im Messbereich (2) ein Unterdruck gegenüber einer Umgebung des Partikelmesskopfes erzeugbar ist und/oder mit der zumindest ein Fluid durch den Messbereich (2) saugbar ist und/oder ein Überdruck in der Umgebung genutzt wird, durch den zumindest ein Fluid durch den Messbereich (2) transportierbar ist.

6. Partikelmesskopf nach einem der vorhergehenden Ansprüche, **dadurch gekennzeichnet, dass** der Partikelmesskopf ein Gehäuse (1) aufweist, wobei der Messbereich im Inneren des Gehäuses (1) angeordnet ist und ein Spiegel (7) und/oder ein Prisma der ersten Lichtführungsvorrichtung (6) und/oder der zweiten Lichtführungsvorrichtung (9) angrenzend an das Innere des Gehäuses (1) angeordnet ist.

7. Partikelmesskopf nach einem der vorhergehenden Ansprüche, **dadurch gekennzeichnet, dass** der Partikelmesskopf eine Absaugvorrichtung (34) und ein Gehäuse (1) aufweist,
dass die erste Lichtführungsvorrichtung (6) einen Spiegel (8) und/oder ein Prisma sowie einen Lichtwellenleiter (7) aufweist,
die zweite Lichtführungsvorrichtung (9) einen Spiegel (8) und/oder ein Prisma sowie einen Lichtwellenleiter (10) aufweist,
wobei
der Messbereich (2) in einem Inneren des Gehäuses (1) angeordnet ist, der Spiegel (8) und/oder das Prisma der ersten (6) und/oder der zweiten (9) Lichtführungsvorrichtung angrenzend an das Innere angeordnet ist,
jeweils ein Ende der Lichtwellenleiter (7, 10) der ersten (6) und/oder der zweiten (9) Lichtführungsvorrichtung im Gehäuse (1) so angeordnet ist, dass Licht von dem entsprechenden Spiegel (8) und/oder Prisma in den Lichtwellenleiter (7, 10) lenkbar ist,
und wobei die Absaugvorrichtung (34) einen Schlauch (5) aufweist oder ist, der in das Innere des Gehäuses (1) mündet.

8. Partikelmesskopf nach Anspruch 7, **dadurch gekennzeichnet, dass** die Absaugvorrichtung (34) einen Hohlleiter (5) oder Schlauch (5) aufweist und dass vorzugsweise ein Lichtwellenleiter (7, 10) der ersten (6) und/oder der zweiten (9) Lichtführungsvorrichtung im Inneren des Hohlleiters (5) verlaufen.

9. Partikelmessvorrichtung mit zumindest einem Partikelmesskopf (31a - 31c) nach einem der vorhergehenden Ansprüche sowie zumindest einer Lichtquelle (35a - 35c), mit der Licht in die erste Lichtführungsvorrichtung (6) einstrahlbar ist und zumindest einem Detektor (36), mit dem Licht aus der zweiten Lichtführungsvorrichtung (9) detektierbar ist.

10. Partikelmessvorrichtung nach einem der vorhergehenden Ansprüche, **gekennzeichnet durch** zumindest zwei Partikelmessköpfe nach einem der Ansprüche 1 bis 8.

11. Verfahren zur Messung des Partikelgehalts eines Fluids, wobei das Fluid in einer Partikelmessvorrichtung nach einem der Ansprüche 9 oder 10 vermessen wird.

12. Verfahren nach dem vorhergehenden Anspruch, **dadurch gekennzeichnet, dass** das Fluid in zumindest zwei Partikelmessköpfen (31a - 31c) einer Partikelmessvorrichtung nach einem der Ansprüche 9 oder 10 vermessen wird, wobei, wenn der Detektor (36) einen gemeinsamen Messwert der durch ihn gemessenen Partikelmessköpfe (31a - 31c) größer als einen vorgegebenen gemeinsamen Grenzwert misst, ein Partikelmesskopf (31a - 31c) ausgewählt wird, dessen Messwert größer als ein Grenzwert für diesen Partikelmesskopf (31a - 31c) ist, und dann das Fluid nur in diesem Partikelmesskopf (31a - 31c) vermessen und dadurch die Partikelquelle geortet wird.

13. Verfahren nach dem vorhergehenden Anspruch, **dadurch gekennzeichnet, dass** der eine Partikelmesskopf (31a - 31c) dadurch ausgewählt wird, dass nacheinander Licht in jeweils einen Partikelmesskopf (31a - 31c) eingestrahlt wird, nur in diesem gemessen wird und dann entschieden wird, in welchem der Partikelmessköpfe (31a - 31c) der Messwert größer als der für diesen Partikelmesskopf (31a - 31c) vorgegebene Grenzwert ist.

## Claims

1. A particle measuring head with a measuring region (2) into which a fluid which is to be measured can be introduced,
at least a first light guidance device (6) with which light can be guided, changing its main beam direction, into the measuring region (2), wherein the light can be guided by the first light guidance device (6) in a first direction into the measuring region (2), and at least a second light guidance device (9) with which light can be guided away, changing its main beam direction, out of the measuring region (2), wherein the light can be guided away through the second light guidance device (9) out of a second direction out of the measuring region (2),
wherein the first light guidance device (6) has at least one optical waveguide (7) and at least one mirror (8) and/or a prism, wherein the light which is guided into the measuring region passes through the optical waveguide (7) and thereafter is deflected via the mirror and/or the prism into the measuring region (2),
wherein the second light guidance device has at least one optical waveguide (10), **characterised in that** the light guided away out of the measuring region (2) is first deflected by the mirror (8) and/or the prism out of the measuring region (2) into the optical waveguide (10) of the second light guidance device, and then passes through this optical waveguide (10), **in that** the mirror (8) or the prism is embodied as a ring, which runs around the measuring region (2), with an inclined, metallised inner surface which faces the measuring region (2), wherein light from the first light guidance device (6) is beamed via at least one aperture (11) into the measuring region (2) and/or light from the measuring region (2) enters via at least one aperture (12) into the second light guidance device (9).

2. A particle measuring head according to the preceding claim, **characterised in that** the offset of the first direction relative to the second direction is between 0° and 180°, in particular from 20° to 160°, or
**in that** the first direction is offset by 90° relative to the second direction, or
**in that** the first direction is identical to the second direction.

3. A particle measuring head according to one of the preceding claims, **characterised in that** the first (6) and/or the second (9) light guidance device has or is at least one optical waveguide (7, 10), wherein preferably the at least one optical waveguide (7, 10) is a glass fibre, a hollow waveguide or an internally metallised tube.

4. A particle measuring head according to one of the preceding claims, **characterised in that** the first (6) and/or the second (9) light guidance device has at least one mirror (7) and/or at least one prism, with which preferably light can be deflected by 90°.

5. A particle measuring head according to one of the preceding claims, **characterised by** at least one extraction device (5), with which an underpressure can be generated relative to surroundings of the particle measuring head in the measuring region (2) and/or with which at least one fluid can be drawn through the measuring region (2) and/or an overpressure in the surroundings is utilised, by which at least one fluid can be transported through the measuring region (2).

6. A particle measuring head according to one of the preceding claims, **characterised in that** the particle measuring head has a housing (1), the measuring region being arranged in the interior of the housing (1) and a mirror (7) and/or a prism of the first light guidance device (6) and/or of the second light guidance device (9) being arranged adjoining the interior of the housing (1).

7. A particle measuring head according to one of the preceding claims, **characterised in that** the particle measuring head has an extraction device (34) and a housing (1),
**in that** the first light guidance device (6) has a mirror (8) and/or a prism and also an optical waveguide (7),
the second light guidance device (9) has a mirror (8) and/or a prism and also an optical waveguide (10),
wherein
the measuring region (2) is arranged in an interior of the housing (1), the mirror (8) and/or the prism of the first (6) and/or the second (9) light guidance device is arranged adjoining the interior,
in each case one end of the optical waveguide (7, 10) of the first (6) and/or the second (9) light guidance device is arranged in the housing (1) such that light can be directed by the corresponding mirror (8) and/or prism into the optical waveguide (7, 10),
and wherein the extraction device (34) has or is a hose (5) which opens into the interior of the housing (1).

8. A particle measuring head according to Claim 7, **characterised in that** the extraction device (34) has a hollow guide (5) or hose (5) and **in that** preferably an optical waveguide (7, 10) of the first (6) and/or the second (9) light guidance device run(s) in the interior of the hollow guide (5).

9. A particle measuring device with at least one particle measuring head (31a - 31c) according to one of the preceding claims and also at least one light source (35a - 35c) with which light can be beamed into the first light guidance device (6), and with at least one detector (36) with which light from the second light guidance device (9) can be detected.

10. A particle measuring device according to one of the preceding claims, **characterised by** at least two particle measuring heads according to one of Claims 1 to 8.

11. A method for measuring the particle content of a fluid, wherein the fluid is measured in a particle measuring device according to one of Claims 9 or 10.

12. A method according to the preceding claim, **characterised in that** the fluid is measured in at least two particle measuring heads (31a - 31c) of a particle measuring device according to one of Claims 9 or 10, wherein, if the detector (36) measures a common measured value of the particle measuring heads (31a - 31c) measured by it greater than a specified common limit value, a particle measuring head (31a - 31c) is selected, the measured value of which is greater than a limit value for this particle measuring head (31a - 31c), and then the fluid is measured only in this particle measuring head (31a - 31c) and the particle source is thereby located.

13. A method according to the preceding claim, **characterised in that** the one particle measuring head (31a - 31c) is selected **in that** light is beamed into one particle measuring head (31a - 31c) in each case in succession, is measured only therein and then a decision is taken as to in which of the particle measuring heads (31a - 31c) the measured value is greater than the limit value specified for this particle measuring head (31a - 31c).

## Revendications

1. Tête de mesure de particules avec une zone de mesure (2), dans laquelle un fluide à mesurer peut être introduit,
au moins un premier dispositif de guidage de lumière (6) avec lequel la lumière peut être guidée en modifiant sa direction principale d'émission dans la zone de mesure (2), la lumière pouvant être guidée par le premier dispositif de guidage de lumière (6) dans une première direction dans la zone de mesure (2) et au moins un deuxième dispositif de guidage de lumière (9), avec lequel la lumière peut être évacuée hors de la zone de mesure (2) en modifiant sa direction principale d'émission, la lumière pouvant être évacuée par le deuxième dispositif de guidage de lumière (9) dans une deuxième direction hors de la zone de mesure (2),
le premier dispositif de guidage de lumière (6) comprenant au moins un guide d'ondes lumineuses (7) et au moins un miroir (8) et/ou un prisme, la lumière guidée dans la zone de mesure traversant le guide d'ondes lumineuses (7) puis étant déviée par le miroir et/ou le prisme vers la zone de mesure (2),
le deuxième dispositif de guidage de lumière comprenant au moins un guide d'ondes lumineuses (10),
**caractérisée en ce que** la lumière évacuée hors de la zone de mesure (2) est d'abord déviée par le miroir (8) et/ou le prisme hors de la zone de mesure (2) vers le guide d'ondes lumineuses (10) du deuxième dispositif de guidage de lumière puis traverse ce guide d'ondes lumineuses (10), **en ce que** le miroir (8) ou le prisme est conçu comme un anneau entourant la zone de mesure (2) avec une surface interne réfléchissante oblique, qui est orientée vers la zone de mesure (2), la lumière provenant du premier dispositif de guidage de lumière (6) étant introduite par l'intermédiaire d'au moins un diaphragme (11) dans la zone de mesure (2) et/ou la lumière entre de la zone de mesure (2) par l'intermédiaire d'au moins un diaphragme (12) vers le deuxième dispositif de guidage de lumière (9).

2. Tête de mesure de particules selon la revendication précédente, **caractérisée en ce que** le décalage entre la première direction et la deuxième direction est entre 0° et 180°, plus particulièrement de 20° à 160°, ou
la première direction est décalée par rapport à la deuxième direction de 90°, ou
la première direction est identique à la deuxième direction.

3. Tête de mesure de particules selon l'une des revendications précédentes, **caractérisée en ce que** le premier (6) et/ou le deuxième (9) dispositif de guidage de lumière comprend au moins un guide d'ondes lumineuses (7, 10), de préférence l'au moins un guide d'ondes lumineuses (7, 10) étant une fibre de verre, un guide d'ondes creux ou un tube à intérieur réfléchissant.

4. Tête de mesure de particules selon l'une des revendications précédentes, **caractérisée en ce que** le premier (6) et/ou le deuxième (9) dispositif de guidage de lumière comprend au moins un miroir (7) et/ou au moins un prisme avec lequel la lumière peut être déviée de 90°.

5. Tête de mesure de particules selon l'une des revendications précédentes, **caractérisée par** au moins un dispositif d'aspiration (5), avec lequel, dans la zone de mesure (2), une dépression peut être générée par rapport à un environnement de la tête de mesure de particules et/ou avec lequel au moins un fluide peut être aspiré à travers la zone de mesure (2) et/ou une surpression dans l'environnement est utilisée, à travers laquelle au moins un fluide peut être transporté à travers la zone de mesure (2).

6. Tête de mesure de particules selon l'une des revendications précédentes, **caractérisée en ce que** la tête de mesure de particules comprend un boîtier (1), la zone de mesure étant disposée à l'intérieur du boîtier (1) et un miroir (7) et/ou un prisme du premier dispositif de guidage de lumière (6) et/ou du deuxième dispositif de guidage de lumière (9) à proximité de l'intérieur du boîtier (1).

7. Tête de mesure de particules selon l'une des revendications précédentes, **caractérisée en ce que** la tête de mesure de particules comprend un dispositif d'aspiration (34) et un boîtier (1),
le premier dispositif de guidage de lumière (6) comprend un miroir (8) et/ou un prisme ainsi qu'un guide d'ondes lumineuses (7),
le deuxième dispositif de guidage de lumière (9) comprend un miroir (8) et/ou un prisme ainsi qu'un guide d'ondes lumineuses (10),
la zone de mesure (2) étant disposée à l'intérieur du boîtier (1), le miroir (8) et/ou le prisme de premier (6) et/ou du deuxième (9) dispositif de guidage de lumière étant disposé(s) à proximité de l'intérieur,
une extrémité de chacun des guides d'ondes lumineuses (7, 10) du premier (6) et/ou du deuxième (9) dispositif de guidage de lumière étant disposée dans le boîtier (1) de façon à ce que la lumière provenant du miroir correspondant (8) et/ou du prisme puisse être déviée vers le guide d'ondes lumineuses (7, 10),
et le dispositif d'aspiration (34) comprend ou est un tuyau (5) qui débouche à l'intérieur du boîtier (1).

8. Tête de mesure de particules selon la revendication 7, **caractérisée en ce que** le dispositif d'aspiration (34) comprend un guide creux (5) ou un tuyau (5) et **en ce que**, de préférence, un guide d'ondes lumineuses (7, 10) du premier (6) et/ou du deuxième (9) dispositif de guidage de lumière s'étendent à l'intérieur du guide creux (5).

9. Dispositif de mesure de particules avec au moins une tête de mesure de particules (31a - 31c) selon l'une des revendications précédentes ainsi qu'au moins une source de lumière (35a - 35c), avec laquelle la lumière peut être introduite dans le premier dispositif de guidage de lumière (6) et au moins un détecteur (36) avec lequel la lumière sortant du deuxième dispositif de guidage de lumière (9) peut être détectée.

10. Dispositif de mesure de particules selon l'une des revendications précédentes, **caractérisé par** au moins deux têtes de mesure de particules selon l'une des revendications 1 à 8.

11. Procédé de mesure de la teneur en particules d'un fluide, le fluide étant mesuré dans un dispositif de mesure de particules selon l'une des revendications 9 ou 10.

12. Procédé selon la revendication précédente, **caractérisé en ce que** le fluide est mesuré dans au moins deux têtes de mesure de particules (31a - 31c) d'un dispositif de mesure de particules selon l'une des revendications 9 ou 10, moyennant quoi, lorsque le détecteur (36) mesure une valeur commune des têtes de mesure (31a - 31c) mesurée par lui supérieure à une valeur limite commune prédéterminée, une tête de mesure de particules (31a - 31c) est sélectionnée, dont la valeur de mesure est supérieure à une valeur limite pour cette tête de mesure de particules (31a - 31c) puis le fluide n'est mesuré que dans cette tête de mesure de particules (31a- 31c) et la source de particules est ainsi localisée.

13. Procédé selon la revendication précédente, **caractérisé en ce que** la tête de mesure de particules (31a - 31c) est sélectionnée par le fait que la lumière est introduite successivement dans chaque tête de mesure de particules (31a -31c), est mesurée uniquement dans celle-ci puis il est décidé dans laquelle des têtes de mesure de particules (31a - 31c) la valeur de mesure est supérieure à la valeur limite prédéterminée pour cette tête de mesure de particules (31a -31c).
